(19) **Europäisches Patentamt / European Patent Office / Office européen des brevets**

(11) **EP 2 735 549 B1**

(12) **EUROPEAN PATENT SPECIFICATION**

(45) Date of publication and mention
of the grant of the patent:
**25.10.2017 Bulletin 2017/43**

(21) Application number: **12815440.8**

(22) Date of filing: **19.07.2012**

(51) Int Cl.:
***C03B 1/02*** *(2006.01)*       ***C03B 3/02*** *(2006.01)*

(86) International application number:
**PCT/JP2012/068351**

(87) International publication number:
**WO 2013/012040 (24.01.2013 Gazette 2013/04)**

(54) **MANUFACTURING METHOD FOR MOLTEN GLASS AND MANUFACTURING METHOD FOR GLASS ARTICLE**

HERSTELLUNGSVERFAHREN FÜR GESCHMOLZENES GLAS UND HERSTELLUNGSVERFAHREN FÜR EINEN GLASGEGENSTAND

PROCÉDÉ DE FABRICATION POUR VERRE FONDU ET PROCÉDÉ DE FABRICATION POUR ARTICLE EN VERRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.07.2011 JP 2011157767**

(43) Date of publication of application:
**28.05.2014 Bulletin 2014/22**

(73) Proprietor: **Asahi Glass Company, Limited Tokyo 100-8405 (JP)**

(72) Inventors:
• **SHINOHARA, Nobuhiro
Tokyo 100-8405 (JP)**

• **KUNISA, Yasuhiro
Tokyo 100-8405 (JP)**
• **OHKAWA, Satoru
Tokyo 100-8405 (JP)**
• **ONODA, Hitoshi
Tokyo 100-8405 (JP)**

(74) Representative: **Müller-Boré & Partner
Patentanwälte PartG mbB
Friedenheimer Brücke 21
80639 München (DE)**

(56) References cited:
**WO-A1-2011/024913     WO-A1-2012/039327
JP-A- 2007 297 239     JP-A- 2010 202 413**

## Description

The present invention relates to a method for producing molten glass by an in-flight melting method using granules, and a method for producing a glass product by using the method for producing molten glass.

A glass product is usually produced by melting glass raw materials by means of a glass melting furnace to obtain molten glass, and forming and solidifying the molten glass into a desired shape. However, in order to obtain uniform molten glass by means of a glass melting furnace, it is necessary to maintain the molten state for an extremely long period of time, and a large energy consumption is unavoidable.

In order to solve this problem, a technique so-called an in-flight melting method has been proposed in which particles (granules) made of a mixture of glass raw materials are heated and melted in a gas phase atmosphere to form molten glass particles, and then the molten glass particles are collected to form a liquid phase (molten glass) (e.g. Patent Document 1 or Non-patent Document 1).
Patent Document 1: JP-A-2007-297239

EP 2 471 756 A1 describes a process for producing granules as well as a process for producing a glass product.
Non-patent Document 1: Toru Iseda, Research Results of NEDO's Advanced Research "Development of Innovative In-flight Glass Melting Technology for Energy Conservation", NEW GLASS Vol. 23, No. 4, 2008, p. 42-45

When a glass product is produced by means of such an in-flight melting method, in the in-flight melting furnace, granules are transported by e.g. air to a burner, and the granules are melted in flight by the flame for vitrification. However, it is undesirable that during such a process, dust is formed.

For example, if fine particles are contained in the granules to be supplied to the in-flight melting furnace, such fine particles will become dust. Further, if the strength of the granules is inadequate, a part of the granules is likely to be broken or particles at the granule surfaces are likely to peel off to form fine powder, and such fine powder will become dust.

The dust is likely to drift and scatter in the in-flight melting furnace or in a pneumatic transportation system to pneumatically transport the granules and thus is likely to be discharged out of the in-flight melting furnace. Therefore, if granules which are likely to form such dust, are supplied to the in-flight melting furnace, a large amount of the dust will enter an exhaust gas pathway, whereby clogging of a filter is likely to result. Further, the composition of molten glass obtainable by the in-flight melting method is likely to change, and the composition of the molten glass tends to be nonuniform.

It is an object of the present invention to provide a method for producing molten glass, whereby formation of dust can be suppressed when the molten glass is produced by an in-flight melting method, and a method for producing a glass product by using such a method for producing molten glass.

In order to solve the above problem, the method for producing molten glass of the present invention is a method for producing molten glass, which comprises melting granules of a glass raw material mixture in a gas phase atmosphere so that at least a part of the granule particles is melted to form molten glass particles and collecting the molten glass particles to form molten glass, wherein the granules contain silica sand as a glass raw material, characterized in that the method comprises producing the granules by mixing glass raw materials, followed by granulating the mixture by a tumbling granulation method without pulverizing it, and the granules satisfy the following conditions:

(1) in a particle size distribution curve obtained by sieving the granules by means of a sieve having 1 mm openings and measuring the granules passed through the sieve by a dry laser diffraction scattering method, D50 representing the cumulative volume median diameter is from 466 to 800 $\mu$m,
(2) the average particle size of the silica sand in the granules is from 20.7 to 40 $\mu$m, provided that the particle size distribution curve of silica sand to be used as a glass raw material is measured by a wet laser diffraction scattering method, and D50 representing the cumulative volume median diameter in the obtained particle size distribution curve is taken as the average particle size of the silica sand, and
(3) in a particle size distribution curve obtained by measuring water-insoluble particles which are water-insoluble components of which the amount soluble in 100 mL of water at 20°C is less than 1.0 g and which are particles to constitute the granules by a wet laser diffraction scattering method, the ratio of D90/D10 is at least 10, where D10 represents the particle size of the 10% cumulative volume from the small particle size side and D90 represents the particle size of the 90% cumulative volume from the small particle size side,
wherein the granules have a bulk density of at least 64% as measured by a mercury intrusion technique with bulk density [%] = 100 - porosity [%], and
the granules have a crushing strength of at least 1 MPa with a value of the crushing strength of the granules being an average value of values (unit: MPa) obtained by measuring the crushing strength by the method in accordance with JIS R1639-5 with respect to from 50 to 100 granule particles optionally sampled from the granules.
(4) As stated above, the granules have a bulk density of at least 64% as measured by a mercury intrusion technique.
(5) It is preferred that the number of peaks in a particle size distribution curve obtained by measuring the granules by a dry laser diffraction scattering method, is 1.

(6) It is preferred that in a particle size distribution curve obtained by measuring the granules by a dry laser diffraction scattering method, the content of particles having a particle size of at most 48 μm is at most 5 vol%.

(7) As stated above, the granules have a crushing strength of at least 1 MPa.

Further, the granules are granules produced by mixing glass raw materials, followed by granulating the mixture without pulverizing it. The granules are granules produced by granulation by a tumbling granulation method.

Further, the present invention provides a method for producing a glass product, which comprises producing molten glass by the method according to any one of claims 1 to 3, shaping the obtained molten glass, followed by annealing. According to the method for producing molten glass of the present invention, when molten glass is produced by an in-flight melting method, formation of dust can be suppressed. Therefore, it is possible to obtain molten glass having uniform composition, and it is possible to obtain a glass product of high quality with uniform glass composition.

BRIEF DESCRIPTION OF DRAWINGS

Fig. 1 is a schematic diagram illustrating an in-flight melting furnace used for the measurement of the dust formation rates in Examples.

Fig. 2 is a graph showing the results of measuring a particle size distribution curve in a Reference Example.

Fig. 3 is a graph showing the results of measuring a particle size distribution curve in a Reference Example.

Fig. 4 is a graph showing the results of measuring a particle size distribution curve in an Example.

Fig. 5 is a graph showing the results of measuring a particle size distribution curve in a Reference Example.

Fig. 6 is a graph showing the results of measuring a particle size distribution curve in a Reference Example.

Fig. 7 is a graph showing the results of measuring a particle size distribution curve in a Reference Example.

Fig. 8 is a graph showing the results of measuring a particle size distribution curve in an Example.

Fig. 9 is a graph showing the results of measuring a particle size distribution curve in an Example.

Fig. 10 is a graph showing the results of measuring a particle size distribution curve in an Example.

Fig. 11 is a graph showing the results of measuring a particle size distribution curve in a Comparative Example.

Fig. 12 is a graph showing the results of measuring a particle size distribution curve in a Comparative Example.

Fig. 13 is a graph showing the results of measuring a particle size distribution curve in a Comparative Example.

Fig. 14 is a graph showing the results of measuring a particle size distribution curve in a Comparative Example.

Fig. 15 is a graph showing the results of measuring a particle size distribution curve in a Comparative Example.

Fig. 16 is a graph showing the results of measuring a particle size distribution curve in a Comparative Example.

In the present invention, a granule means an agglomerate of particles (a granule particle in the present invention) having a plurality of particles (constituting particles in the present invention) integrally clumped together.

In the present invention, D50 representing an average particle size of particles is a median diameter of the 50% cumulative volume in a particle size distribution curve measured by means of a dry or wet laser diffraction scattering method.

D10 represents the particle size of the 10% cumulative volume from the small particle size side in the particle size distribution curve, and D90 represents the particle size of the 90% cumulative volume from the small particle size side in the particle size distribution curve.

D1 represents the particle size of the 1 % cumulative volume from the small particle size side in the particle size distribution curve, and D99 represents the particle size of the 99% cumulative volume from the small particle size side in the particle size distribution curve.

The "dry" system for the measurement of the particle size distribution means that with respect to a sample in a powder form, the particle size distribution is measured by means of a laser diffraction scattering method.

The "wet" system for the measurement of the particle size distribution means that in such a state that a powder sample is dispersed in a proportion of from 0.01 to 0.1 g in 100 mL of water at 20°C, the particle size distribution is measured by means of a laser diffraction scattering method.

Here, in the particle size distribution curve measured by a wet laser diffraction scattering method, components dissolved in water under the above conditions are not included.

<Glass composition>

In the present invention, components in glass are represented by oxides such as $B_2O_3$, $SiO_2$, $Al_2O_3$, MgO, CaO, SrO, BaO, $Na_2O$, etc., and the contents of the respective components are represented by mass proportions (mass%) as calculated as oxides. Further, a glass composition is meant for a glass composition of solid glass, and a glass composition of molten glass is represented by a glass composition of glass obtained by solidifying the molten glass.

Molten glass or a glass product in the present invention is not particularly limited, so long as it is one having $SiO_2$ contained in its composition (glass composition).

For example, it may be soda lime glass having a composition composed mainly of $SiO_2$, $Na_2O$ and CaO, or borosilicate glass having silicon oxide as the main component and containing a boron component. The borosilicate glass may be alkali-free borosilicate glass containing substantially no alkali metal oxides, or may contain alkali metal oxides. Here, alkali-free glass is glass containing substantially no alkali metal oxides. Specifically, the proportion of alkali metal oxides in the glass composition is preferably at most 0.1 mass%, particularly preferably at most 0.02 mass%.

The following are examples of preferred glass compositions.

As a glass composition (unit: mass%) of soda lime glass, preferred is:

from 45 to 85% of $SiO_2$, from 1 to 25% of $Na_2O$, from 0 to 25% of CaO, from 0 to 20% of $Al_2O_3$, from 0 to 15% of $K_2O$ and from 0 to 10% of MgO, and more preferred is:

from 50 to 75% of $SiO_2$, from 1 to 20% of $Na_2O$, from 1 to 18% of CaO, from 0 to 11% of $Al_2O_3$, from 0 to 13% of $K_2O$ and from 0 to 8% of MgO.

As a glass composition of alkali-free borosilicate glass, preferred is:

from 40 to 85% of $SiO_2$, from 1 to 25% of $Al_2O_3$, from 1 to 20% of $B_2O_3$, from 0 to 10% of MgO, from 0 to 17% of CaO, from 0 to 24% of SrO, from 0 to 30% of BaO and less than 0.1 % of $R_2O$ (R is an alkali metal), and more preferred is:

from 45 to 70% of $SiO_2$, from 10 to 22% of $Al_2O_3$, from 5 to 16% of $B_2O_3$, from 0 to 7% of MgO, from 0 to 14% of CaO, from 0.5 to 13% of SrO, from 0 to 15% of BaO and less than 0.1 % of $R_2O$ (R is an alkali metal).

As a glass composition of borosilicate glass containing alkali metal, preferred is:

from 45 to 85% of $SiO_2$, from 2 to 20% of $Al_2O_3$, from 1 to 15% of $B_2O_3$, from 0 to 10% of MgO, from 0 to 10% of CaO, from 0 to 9% of SrO, from 0 to 9% of BaO and from 2 to 15% of $R_2O$ (R is an alkali metal), and more preferred is:

from 50 to 82% of $SiO_2$, from 2 to 20% of $Al_2O_3$, from 2 to 13% of $B_2O_3$, from 0 to 5% of MgO, from 0 to 9% of CaO, from 0 to 6% of SrO, from 0 to 2% of BaO and from 4 to 15% of $R_2O$ (R is an alkali metal).

<Glass raw materials>

Glass raw materials are compounds which can become oxides shown in the above glass composition in a step for the production of molten glass. Specifically, oxides shown in the above glass composition or compounds (such as chlorides, hydroxides, carbonates, sulfates, nitrates, etc.) which can become such oxides by e.g. thermal decomposition, are used.

The composition of the glass raw material mixture shall be designed to substantially agree with the desired glass composition as calculated as oxides. In the case of producing glass containing a volatile component such as boron oxide, the composition of the glass raw material mixture is determined by taking into consideration the volatilization amount of the volatile component in the process for the production of glass. For example, the boron source is made to be larger in amount by an amount corresponding to the volatile component than the boron oxide content in the desired borosilicate glass.

At the time of producing granules, the glass raw material mixture is used usually in a powder form. A water-soluble compound may be used in such a state that it is preliminarily dissolved in water.

In the present invention, a compound of which the amount soluble in 100 mL of water at 20°C is at least 1.0 g, is regarded as a water-soluble component, and a compound of which such an amount is less than 1.0 g is regarded as a water-insoluble component.

As the glass raw materials, known glass materials may suitably be used. Examples will be given below.

[Silicon source]

The silicon source is a compound which can become a $SiO_2$ component in the step of producing molten glass. In the present invention, as the silicon source, at least silica sand is used. It is preferred that the entire silicon source is silica sand. Silica sand is a water-insoluble component.

The content of silica sand in the glass raw material mixture is preferably at least 40 mass%, more preferably at least 45 mass%. The upper limit is determined depending upon the desired glass composition or the types of compounds which will become oxides to constitute the glass composition, and it is practically about 70 mass%.

[Aluminum source]

The aluminum source is a compound which can become an $Al_2O_3$ component in the step of producing molten glass. Aluminum oxide, aluminum hydroxide, etc. are preferably used. One of them may be used alone, or two or more of them may be used in combination. Each of aluminum oxide and aluminum hydroxide is a water-insoluble component.

[Boron source]

The boron source is a compound which can become a $B_2O_3$ component in the step of producing molten glass. Boric acid such as orthoboric acid ($H_3BO_3$), metaboric acid ($HBO_2$) or tetraboric acid ($H_2B_4O_7$) is preferably used. Among them, orthoboric acid is preferred, since it is inexpensive and readily available. Further, boric acid and a boron source other than boric acid may be used in combination. The boron source other than boric acid may, for example, be boron oxide ($B_2O_3$) or colemanite. One of them may be used alone, or two or more of them may be used in combination.

Among them, water-soluble components are boric acid and boron oxide, and a water-insoluble component is colemanite. Colemanite is a boron source and also a calcium source.

[Magnesium source]

The magnesium source is a compound which can become a MgO component in the step of producing molten glass. A carbonate, sulfate, oxide, hydroxide, chloride and fluoride of magnesium may be mentioned. One of them may be used alone, or two or more of them may be used in combination.

Among them, water-soluble components are $MgSO_4$, $Mg(NO_3)_2$ and $MgCl_2$, and water-insoluble components are $MgCO_3$, MgO, $Mg(OH)_2$ and $MgF_2$. $MgSO_4$, $Mg(NO_3)_2$ and $MgCl_2$ are usually present in the form of hydrates. Such hydrates are $MgSO_4 \cdot 7H_2O$, $Mg(NO_3)_2 \cdot 6H_2O$ and $MgCl_2 \cdot 7H_2O$.

Among the above magnesium sources, magnesium chloride, magnesium sulfate and magnesium fluoride are also clarifiers.

Further, dolomite (ideal chemical composition: $CaMg(CO_3)_2$) may also be used. Dolomite is a magnesium source and also a calcium source. Dolomite is a water-insoluble component.

[Alkaline earth metal source]

The alkaline earth metal source in the present invention is meant for Sr, Ca or Ba. The alkaline earth metal source is a compound which can become SrO, CaO or BaO in the step of producing molten glass. As the alkaline earth metal sources, carbonates, sulfates, nitrates, oxides, hydroxides, chlorides and fluorides of alkaline earth metals may be mentioned. One of them may be used alone, or two or more of them may be used in combination.

Among them, water-soluble components are chlorides and nitrates of the respective alkaline earth metals, barium hydroxide $Ba(OH)_2 \cdot 8H_2O$ and strontium hydroxide $Sr(OH)_2 \cdot 8H_2O$, and water-insoluble components are calcium hydroxide $Ca(OH)_2$ and carbonates, sulfates and fluorides of the respective alkaline earth metals. An oxide will react with water to form a hydroxide.

Sulfates, chlorides and fluorides of alkaline earth metals are also clarifiers.

[Alkali metal source]

The alkali metal source in the present invention is meant for Na, K or Li. The alkali metal source is a compound which can become $Na_2O$, $K_2O$ or $Li_2O$ in the step of producing molten glass. As the alkali metal sources, carbonates, sulfates, nitrates, oxides, hydroxides, chlorides and fluorides of alkali metals may be mentioned. One of them may be used alone, or two or more of them may be used in combination.

Among them, all except for lithium fluoride LiF are water-soluble components. An oxide will react with water to form a hydroxide.

Sulfates, chlorides and fluorides of alkali metals are also clarifiers.

<Granules>

Granules in the present invention are ones obtainable by granulating a raw material composition containing a plurality of glass raw materials. That is, the granules are granules of a glass raw material mixture containing a plurality of glass raw materials which can become glass having the desired glass composition.

The glass raw material mixture to be supplied for granulation may contain, in addition to the glass raw materials, auxiliary raw materials such as a clarifier, a colorant, a melting assistant, an opacifier, etc., as the case requires. Further, as granulation components required for the granulation, a binder, a dispersant, a surfactant, etc. may, for example, be incorporated. As such auxiliary raw materials or granulation components, known components may suitably be used.

In the dry solid content of the glass raw material mixture to be supplied for granulation, the proportion of the glass raw materials is preferably at least 90 mass%, more preferably at least 95 mass%. It may be 100 mass%.

The granules in the present invention are produced by mixing all necessary glass raw materials to form a glass raw material mixture, and granulating the glass raw material mixture (which may contain auxiliary raw materials as mentioned above) by suitably using a known granulation method. In the case of using a granulation method employing water, water-soluble glass raw materials may be contained in the form of an aqueous solution in the glass raw material mixture.

A step from the time of mixing the glass raw materials until obtaining the granules will hereinafter be referred to as a granulation step. In general, in the case of using glass raw materials which are preliminarily pulverized to the necessary particle size, it is not required to pulverize the glass raw material mixture in the granulation step. In general, in a case where even only a part of the glass raw materials is not pulverized to the necessary particle size, the glass raw material powder is firstly pulverized in the granulation step and then granulation is carried out.

In general, a granulation method may, for example, be a tumbling granulation method, a fluidized-bed granulation method, an extrusion granulation method, a spray drying granulation method or a freeze-drying method. Among them, a tumbling granulation method is conveniently used, since mixing and granulation can thereby be carried out continuously, and a spray drying granulation method is useful for granulating a large amount of raw materials. As the granulation method in the present invention, a tumbling granulation method is carried out.

As a tumbling granulation method, preferred is, for example, a method wherein a glass raw material powder is put into a container of a tumbling granulation apparatus, and the interior of the container is subjected to vibration and/or rotation so that while mixing, tumbling and stirring the raw material powder, a predetermined amount of water is sprayed to carry out granulation. The tumbling granulation apparatus may, for example, be Eirich Intensive Mixer (tradename, manufactured by Nippon Eirich Co., Ltd.), or Loedige Mixer (tradename, manufactured by Loedige Process Technology). After granulation by the tumbling granulation apparatus, it is preferred to heat and dry the obtained particles.

Generally, in a spray drying granulation method, for example, water is supplied to the glass raw material powder, followed by stirring to prepare a slurry, and the slurry is sprayed e.g. into a high temperature atmosphere at a level of from 200 to 500°C by means of a spraying means such as a spray drier for drying and solidifying it to obtain granules. Further, in the case of using glass raw materials which are not pulverized to the necessary particle size, by means of a pulverizing and stirring apparatus such as a ball mill, the glass raw materials are mixed and stirred, while being pulverized, to obtain a glass raw material mixture. By carrying out the pulverization and stirring in the presence of water, a raw material slurry comprising the glass raw material powder and water, is obtainable. In the case of a powder of the glass raw material mixture obtained by conducting the pulverization and stirring in a dry system, water may be added thereto, followed by stirring to obtain a raw material slurry.

In the case of the present invention where in the granulation step, there is no process of pulverization or the like to positively change the particle size distribution of the glass raw material particles, with respect to particles of each glass raw material, the particle size at the time of mixing and the particle size in the obtained granules substantially agree to each other, except for particles having a particularly low strength. Accordingly, in the case of silica sand, the particle size distribution of silica sand particles in the granules is considered to be substantially the same as the particle size distribution of silica sand used as a glass raw material, and once its particle size distribution is measured before it is mixed with other glass raw materials, the measured value may be regarded as the particle size distribution of silica sand particles in the granules.

On the other hand, in a granulation method such as a spray drying granulation method (not used in the present invention), it is easy to carry out a mass production of granules by providing a process of pulverization or the like to positively change the particle size of glass raw material particles in the granulation step. In such a case, the particle size distribution of glass raw material particles is different between before the granulation and in the granules, and therefore, the particle size distribution of glass raw material particles in the granules is obtained by measuring the granules. Accordingly, in the case of silica sand, using the produced granules as the object to be measured, silica sand particles are determined among particles in the granules, and the particle size distribution of the silica sand particles is measured.

The granules in the present invention may be ones having coarse particles removed by sieving, as the case requires, after the granulation step.

In the measurement of D50 under the after-mentioned condition (1), the recovery rate by sieving the granules of the present invention by means of a sieve having 1 mm openings, is preferably at least 60 mass%, more preferably at least 80 mass%. For this purpose, if necessary, the granules obtained in the granulation step may be preliminarily sieved to remove coarse particles thereby to obtain the granules of the present invention, such being preferred. The openings of the sieve to be used for such preliminary sieving are preferably at most 1 mm, more preferably from 500 $\mu$m to 1 mm.

Here, the recovery rate in the sieving is a proportion of the mass (unit: mass%) of granules passed through the sieve, based on the total mass of the granules subjected to the sieving.

In the present invention, granules which satisfy the following conditions (1) to (4) and (7) are used at the time of producing molten glass by an in-flight melting method. Granules which further satisfy at least one of the following conditions (5) and (6) in addition to the conditions (1) to (4) and (7) are preferred.

(1) In a particle size distribution curve obtained by sieving the granules by means of a sieve having 1 mm openings and measuring the granules passed through the sieve by a dry laser diffraction scattering method (hereinafter sometimes referred to simply as a dry measuring method), D50 representing the cumulative volume median diameter (hereinafter referred to as D50 of the granules) is from 466 to 800 $\mu$m.

When D50 of the granules is at least 80 $\mu$m, the content of fine particles with a particle size of at most 50 $\mu$m which become dust, is small, and formation of dust can easily be suppressed.

In the in-flight melting method, the granules are permitted to fly in a burner flame to let a part or all of them be melted. When D50 of the granules is at most 800 $\mu$m, the granules tend to be readily melted when heated.

Further, it is considered that the granules receive a thermal shock when they enter into the burner flame, and as the particle size of the granules is larger, breakage by such a thermal shock is more likely to occur. When D50 of the granules is at most 800 $\mu$m, the granules are less likely to be broken in the in-flight melting furnace, and formation of dust can be suppressed.

The upper limit of D50 of the granules is preferably 700 $\mu$m.

(2) The average particle size of the silica sand in the granules is from 20.7 to 40 $\mu$m, provided that the average particle size of the silica sand is meant for D50 in the following (I).

If the average particle size of silica sand is less than 1 $\mu$m, it is costly and undesirable to pulverize silica sand to such fine particles. Further, in granulation by means of a tumbling granulation method, the bulk of the raw material tends to increase, whereby uniform mixing sometimes tends to be difficult.

On the other hand, when the average particle size of silica sand is at most 40 $\mu$m, the content of relatively small granule particles to cause dust or silica sand present alone is small, whereby formation of dust can be suppressed. That is, in a granule, a plurality of silica sand particles are clumped together with other glass raw material particles to form one granule particle. At that time, an adhesive force due to the liquid bridge (a mutually attracting force due to a liquid membrane formed between a particle and a particle) is considered to be working between silica sand particles. However, a silica sand particle having a large particle size tends to be hardly integrally clumped with another silica sand particle by such an adhesive force, whereby a granule particle having a small particle size, such as one containing only one silica sand particle, is likely to be formed. Such a granule particle having a small particle size is not only likely to cause dust but also deteriorates uniformity of the composition among granule particles, whereby the uniformity of the composition of molten glass to be produced by using such granules tends to be deteriorated.

The upper limit of the average particle size of silica sand is preferably 30 $\mu$m.

The average particle size of silica sand means the following (I) (according to the present invention) or (II) (not according to the present invention).

(I) In the case of granules produced by mixing glass raw materials and granulating the mixture without pulverization according to the present invention, the particle size distribution curve of silica sand to be used as a glass raw material is measured by a wet laser diffraction scattering method, and D50 representing the cumulative volume median diameter in the obtained particle size distribution curve is taken as the average particle size of the silica sand. Here, data treatment of an approximate particle diameter is carried out by taking it as a circle-corresponding diameter.

Thus, by adjusting silica sand to be used for the production of granules so that D50 as measured by the wet measuring method would be from 20.7 to 40 $\mu$m and using such silica sand, granules which satisfy the above condition (2) can be obtained.

(II) In General, in the case of granules produced by mixing glass raw materials, pulverizing the mixture, followed by granulation, the produced granules can be observed by an electron probe microanalyzer (EPMA) to distinguish silica sand in the granules and measure the particle size by the method disclosed in JIS R1670; by the measurement, a number-based particle size distribution is obtained, and this number-based particle size distribution is converted to a volume-based particle size distribution by Schwartz-Saltykov method; and the obtained volume-based average particle size $D_{ave}$ can be taken as the average particle size of the silica sand.

In general, as mentioned above, in the case of granules produced by a granulation step including a process for pulverizing the glass raw material mixture, the particle size distribution of silica sand used as a glass raw material and the particle size distribution of silica sand in the granules become different from each other. In such a case, the granules are observed by an electron probe microanalyzer (EPMA) to distinguish silica sand in the granules, and its particle size is measured by the method disclosed in JIS R1670. The particle size distribution as measured by this method is "number-based", and, therefore, is converted to a volume-based particle size distribution by means of Schwartz-Saltykov method. The volume-based average particle size $D_{ave}$ thus obtained may be deemed to be the cumulative volume median diameter (D50) of silica sand in the granule particles.

Specifically, with respect to 3 to 5 granule particles optionally sampled from the granules, from a comparison of a color mapping figure by means of an electron probe microanalyzer (EPMA) with a usual electron microscopic image, silica sand particles are identified in the electron microscopic image, and with respect to about 100 silica sand particles, circle-corresponding diameters (particle sizes) are measured by a method stipulated in JIS R1670 (Method for measuring grain sizes of fine ceramics). Then, by means of Schwartz-Saltykov method, from the distribution of the obtained circle-corresponding diameters (particle size distribution), the distribution of diameters of spheres (particles) is calculated. Further, by obtaining the volume of the spheres (particles) from the diameters of the spheres (particles), it is converted to the volume-based particle size distribution. The volume-based average particle size Dave is calculated by the following formula:

$$D_{ave} = \Sigma(\text{diameter of sphere} \times \text{volume})/\Sigma(\text{volume of sphere})$$

Schwartz-Saltykov method is disclosed in the following Document 2 and thus is publicly known.
Document 2: Nobuyasu Mizutani, et al. "Ceramic Processing", pp. 195-201, Gihodo Shuppan Co., Ltd., 1985
(3) In a particle size distribution curve obtained by measuring water-insoluble particles which are particles to constitute the granules by a wet laser diffraction scattering method, the ratio of D90/D10 is at least 10, where D10 represents the particle size of the 10% cumulative volume from the small particle size side and D90 represents the particle size of the 90% cumulative volume from the small particle size side. That is, using, as a measuring object, the glass raw material mixture to form granules or individual raw materials before mixing, such a measuring object is dispersed in water to dissolve water-soluble components, and in such a state that the remaining water-insoluble particles are dispersed in water, the particle size distribution is measured by a laser diffraction scattering method, whereupon from the measured results, D90/D10 is obtained. In some cases, it is possible to obtain D90/D10 by using the granules themselves as the measuring object.

In the case of producing granules by granulating a glass raw material mixture without pulverization according to the present invention, the glass raw material mixture to be used as the measuring object may be the glass raw material mixture before granulation, and in the case of producing granules by pulverizing a glass raw material mixture, followed by granulation, the glass raw material mixture after the pulverization and before the granulation is to be used as the measuring object. Further, in the case of producing granules by granulating a glass raw material mixture without pulverization according to the present invention, water-insoluble components among the raw materials before mixing may be measured individually by a wet laser diffraction scattering method, whereupon from the measured results and the composition of the glass raw material mixture, D90/D10 of the glass raw material mixture may be calculated. Furthermore, in a case where a binder component in the granules is water-soluble, the granules may be dispersed in water to dissolve water-soluble components, and in such a state that the remaining water-insoluble particles are dispersed in water, the particle size distribution curve is measured by a laser diffraction scattering method, whereupon in the same manner, D90/D10 may be obtained.

The particle size distribution curve thus obtained corresponds to a particle size distribution curve of only water-insoluble raw material particles among the granule-constituting particles. Hereinafter, such D90/D10 will be referred to as D90/D10 of the granule-constituting particles.

The larger the value of D90/D10 of the granule-constituting particles, the wider the distribution of particle sizes in the particle size distribution curve, and the larger the difference in the particle size between fine particles and coarse particles. When coarse particles and fine particles are present in the granule-constituting particles, the fine particles will be filled between the coarse particles in the individual granule particles, whereby the density of the granule particles tends to be improved. When the density of the granule particles is improved, the strength of the granule particles tends to be improved.

In the present invention, when the value of D90/D10 of the granule-constituting particles is at least 10, such an effect to improve the density of the granule particles due to the presence of coarse particles and fine particles, is likely to be sufficiently obtainable.

The upper limit of the value of D90/D10 of the granule-constituting particles is not particularly limited. However, D90 is preferably at most 500 $\mu$m, since it is thereby easy to satisfy D50 of granules under the above-mentioned condition (1).

The range of the value of D10 to D90 is preferably from 0.5 to 500 $\mu$m, more preferably from 1 to 300 $\mu$m.

In general, in the case of granules to be produced by granulation after pulverizing a glass raw material mixture, D90/D10 of water-insoluble constituting particles in the glass raw material mixture after the pulverization may be deemed to be equal to D90/D10 of the granule-constituting particles. Accordingly, it is possible to satisfy the above condition (3) by adjusting so that D90/D10 in a particle size distribution curve of the glass raw material mixture after the pulverization as measured by a wet laser diffraction scattering method would be at least 10.

For example, such adjustment may be made so that D90/D10 in a particle size distribution curve of the water-insoluble component present in a slurry to be supplied for spray drying would be at least 10.

On the other hand, in the case of granules to be produced by granulation without pulverizing a glass raw material mixture according to the present invention, D90/D10 in a particle size distribution curve obtained by measuring the glass raw material mixture before the granulation by a wet laser diffraction scattering method may be deemed to be equal to D90/D10 of the granule-constituting particles. Accordingly, it is possible to satisfy the above condition (3) by adjusting the mixing of water-insoluble raw materials so that D90/D10 in the particle size distribution curve would be at least 10.

Further, with respect to the respective water-insoluble raw materials, particle size distribution curves may be respectively measured by a wet laser diffraction scattering method, and from the obtained respective particle size distribution curves and the content ratios of the respective water-insoluble raw materials in the total of all water-insoluble raw materials, the particle size distribution curve with respect to the total of all water-insoluble raw materials can be calculated. Accordingly, it is possible to satisfy the above condition (3) by adjusting, at the time of mixing raw materials such as glass raw materials, so that D90/D10 in the above particle size distribution curve would be at least 10.

(4) The bulk density of the granules is at least 64% as measured by a mercury intrusion technique.

In the present invention, the bulk density of the granules as measured by a mercury intrusion technique is a value calculated by the following formulae (i) and (ii) by using a value of a pore volume measured by a mercury intrusion technique.

The material density in the formula (i) is the density of a material to constitute the granules. Here, the density of a mixture was obtained by calculation from literature data of densities of the respective compositions of the respective raw materials used for the granules and the constituting ratios of the respective raw materials, and used as the material density.

$$\text{Porosity [\%]} = \cfrac{\cfrac{\text{Pore volume [mm}^3\text{/g]}}{1000}}{\cfrac{\text{Pore volume [mm}^3\text{/g]}}{1000} + \cfrac{1}{\text{Material density [g/cm}^3\text{]}}} \times 100 \quad \text{(i)}$$

$$\text{Bulk density [\%]} = 100 - \text{Porosity [\%]} \quad \text{(ii)}$$

When the bulk density of the granules is at least 50%, the porosity contained in the granule particles is small, and good strength of granule particles is readily obtainable. Accordingly, formation of dust due to e.g. disintegration of granule particles can be thereby easily suppressed. The upper limit of the bulk density of the granules is not particularly limited, but it is practically at a level of at most 80%.

(5) The number of peaks in a particle size distribution curve obtained by measuring the granules by a dry laser diffraction scattering method is preferably 1. In the present invention, peaks in a particle size distribution curve mean points where the inclination of the particle size distribution curve, representing the frequency distribution, becomes zero within a range from D1 where the particle size becomes substantially the minimum to D99 where the particle size becomes substantially the maximum.

In the present invention, the condition (5) is deemed to be satisfied when the number of peaks is 1 in a particle size distribution curve measured under the following condition (X).

Condition (X): The resolution (division number) within a range of from 1 to 1,500 $\mu$m is at least 50.

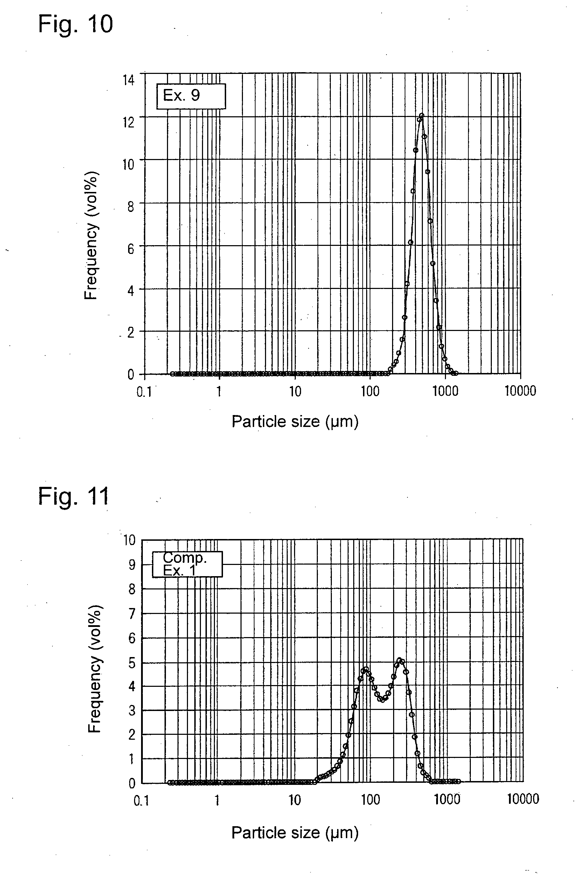

For example, if silica sand particles having relatively large particle sizes, which are hardly integrally clumped together with other silica sand particles as mentioned under the above condition (2), are present in a large amount, a 2nd peak appears on the small particle size side of the main peak in the particle size distribution curve, as shown in Figs. 11, 15 and 16 in the after-mentioned Comparative Examples.

Thus, when such a 2nd peak is not present and the number of peaks in the particle size distribution curve is 1, dust tends to be well suppressed.

(6) In a particle size distribution curve obtained by measuring the granules by a dry laser diffraction scattering method, the content of particles having a particle size of at most 48 $\mu$m is at most 5 vol%.

According to a finding by the present inventors, the size of dust is roughly at most 50 $\mu$m. Accordingly, granules having a particle size of at most 48 $\mu$m or fine particles of at most 48 $\mu$m formed by breakage of granules, are likely to be a cause for dust.

Therefore, in order to suppress formation of dust better, the content of particles having a particle size of at most 48 $\mu$m in the granules is preferably at most 5 vol%, more preferably at most 3 vol%, most preferably zero.

As a method for reducing the content of particles having a particle size of at most 48 $\mu$m in the granules, there is a method to increase the size of liquid droplets to form granules within a range where drying is possible, by such a method that, for example, in the case of a spray drying granulation method, the concentration of the slurry is made to be higher (the solid content is preferably contained in an amount of at least 30% as calculated by weight), or the feeding amount of the slurry is made larger, and in the case of an atomizer wherein the spray system is a disk rotary type, the rotational speed of the disk is controlled to be not too high, and in a case where the spray system is a pressure nozzle type, the pressure is controlled to be not too high. Whereas, in the case of a tumbling granulation method, it is possible to reduce fine granules by such a method that, for example, the amount of water to be added is controlled to be not too small, a sufficient time is taken for the granulation, or an organic or inorganic binder suitable for granulation is added.

(7) The crushing strength of the granules is at least 1 MPa.

In the present invention, a value of the crushing strength of the granules is an average value of values (unit: MPa) obtained by measuring the crushing strength by the method in accordance with JIS R1639-5 with respect to from 50 to 100 granule particles optionally sampled from the granules.

When the crushing strength is at least 1 MPa, breakage of the granules is less likely to occur in the process for producing molten glass by an in-flight melting method, and formation of fine particles to cause dust tends to be well suppressed.

For example, in an in-flight melting method, breakage of the granules due to collision of particles to one another during transportation (pneumatic transportation) of the granules, breakage of the granules by their collision to pathway walls, breakage of the granules due to an abrupt temperature change (thermal shock) when the granules have entered into a gas burner flame, etc. are considered to be likely to occur, but when the crushing strength of the granules is at least 1 MPa, such breakage troubles can be well prevented.

The crushing strength of the granules is preferably at least 2 MPa, more preferably at least 3 MPa. The upper limit is not particularly limited, but it is practically at a level of at most 20 MPa.

< Method for producing molten glass>

The method for producing molten glass of the present invention is an in-flight melting method. That is, granules are subjected to melting so that at least a part of the granule particles is melted in a gas phase atmosphere to form molten glass particles, and the molten glass particles are collected to form molten glass.

Specifically, granules are firstly introduced into a high temperature gas phase atmosphere of an in-flight melting apparatus. As the in-flight melting apparatus, a known apparatus may be used. Then, the molten glass particles formed in the in-flight melting apparatus are collected to obtain a certain amount of molten glass. Molten glass taken out from the in-flight melting apparatus will be supplied to a shaping step. The method for collecting the molten glass particles may, for example, be a method wherein the molten glass particles falling in the gas phase atmosphere by their own weight, are received and collected in a heat resistant container provided at a lower portion in the gas phase atmosphere.

Here, "at least a part of granules is melted" means that with respect to individual granules, a part or whole of each granule is melted. The state wherein a part of granules is melted, may, for example, be a state wherein the surface of each granule is melted and the center portion thereof is not sufficiently melted. In such a case, in each molten glass particle, the entire particle is not melted, and at the center, a portion not sufficiently melted, is present. However, even in a case where a portion not sufficiently melted is present, in a process where such particles are collected to form glass melt, they are heated, so that uniform molten glass is obtainable at the time of supplying to a shaping step.

In the in-flight melting method, it is preferred to melt individual granules in the gas phase atmosphere to form molten glass particles. Even if a part of granules may not 21 sufficiently be melted in the gas phase atmosphere, the majority of granules should preferably be formed into molten glass particles in the gas phase atmosphere. In the present invention, including particles not sufficiently melted in the gas phase atmosphere, particles formed in the gas phase atmosphere will be referred to as molten glass particles.

< Method for producing glass product>

The method for producing a glass product of the present invention comprises producing molten glass by the method according to the present invention, shaping the obtained molten glass, followed by annealing. Here, a glass product is meant for a product wherein glass which is solid and has substantially no fluidity at room temperature, is used as a part or whole thereof, and it includes, for example, one obtained by processing a glass surface.

Specifically, firstly the molten glass obtained by the above method for producing molten glass is formed into a desired shape and then annealed. Thereafter, as the case requires, post processing such as cutting or polishing is applied by a known method in a post processing step to obtain a glass product.

The shaping can be carried out by a known method such as a float process, a downdraw process or a fusion process. The float process is a process wherein molten glass is formed into a plate-form on molten tin.

The annealing can also be carried out by a known method.

By using the granules of the present invention in the production of molten glass or in the production of a glass product, formation of dust can be suppressed, and it is possible to obtain molten glass or a glass product, which is excellent in uniformity of the composition.

EXAMPLES

Now, the present invention will be described in further detail with reference to Examples, but it should be understood that the present invention is by no means limited to these Examples. As measuring methods, the following methods were employed.

In the measurement for a particle size distribution curve, in a dry measuring method, a laser diffraction·scattering·particle size·particle size distribution measuring apparatus (Microtrac MT3200, tradename, manufactured by Nikkiso Co., Ltd.) was used, and in a wet measuring method, a laser diffraction/scattering particle size distribution measuring apparatus (LA-950V2, tradename, manufactured by Horiba Seisakusho) was used. Further, data treatment of an approximate particle diameter was carried out as a circle-corresponding diameter.

[(a) Average particle size of silica sand in granules]

In a case where granules were produced by a spray drying method e.g. as in the following Reference Examples, pulverization of a glass raw material mixture was carried out before the granulation, and therefore, the average particle size $D_{ave}$ was obtained by the above-mentioned (II) and it was taken as the average particle size of silica sand in the granules. As an electron probe microanalyzer, EPMA-1610 (tradename) manufactured by Shimadzu Corporation was employed.

In a case where granules were produced by a tumbling granulation method, D50 of silica sand used as a glass raw material in the above-mentioned (I) was measured, and it was taken as the average particle size of silica sand in the granules.

The above average particle size will hereinafter be represented by D50 in each case.

[(b) D10, D50, D90 and D90/D10 of water-insoluble particles which become granule-constituting particles]

In a case where granules were produced by a spray drying method, with respect to particles (particles not dissolved) in a slurry to be supplied for spray drying, a particle size distribution curve was measured by a wet measuring method, and D10, D50, D90 and D90/D10 were obtained.

In a case where granules were produced by a tumbling granulation method, with respect to water-insoluble components among glass raw materials, particle size distribution curves were respectively measured by a wet measuring method, and from the respective particle size distribution curves and the compositions (content ratios) of the respective water-insoluble components in the glass raw materials, a particle size distribution curve with respect to the total of only water-insoluble particles among glass raw materials, was calculated, and in such a particle size distribution curve, D10, D50, D90 and D90/D10 were obtained.

[(c) D50 of granules]

The granules were sieved by means of a sieve having 1 mm openings, and granules passed through the sieve were subjected to a dry measuring method to measure a particle size distribution curve of the granules under the above-mentioned condition (X), whereupon from the obtained particle size distribution curve, D50 of the granules was obtained.

[(d) Content of particles of at most 48 $\mu$m], [(e) Number of peaks]

The granules were subjected to a dry measuring method to measure a particle size distribution curve of the granules under the above-mentioned condition (X), and from the obtained particle size distribution curve, the content (unit: %) of granule particles of at most 48 $\mu$m and the number of peaks were obtained.

[(f) Bulk density of granules]

The measurement of the bulk density of granules by a mercury intrusion technique was carried out by means of a mercury porosimeter (manufactured by Thermo Fisher Scientific, tradename: PASCAL 140/440).

[(g) Crushing strength of granules]

With respect to from 30 to 50 granule particles optionally sampled from the obtained granules, the crushing strengths (unit: MPa) were measured by the method in accordance with JIS R1639-5, and the average value was obtained.
As the measuring apparatus, a powder particle hardness meter (Better Hardness Tester BHT 500, manufactured by Seishin Enterprise Co., Ltd.) was used.

[(h) Dust formation rate]

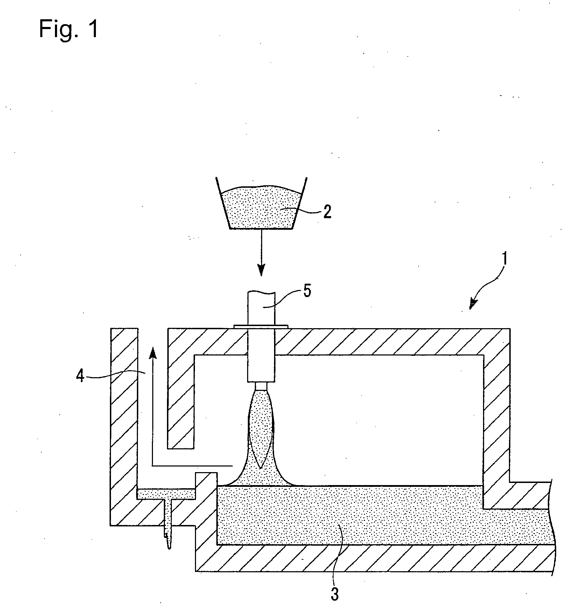

Molten glass 3 was produced by supplying granules 2 in an amount of from 40 to 150 kg/hr together with air for pneumatic transportation at a rate of from 10 to 70 $Nm^3$/hr, to an in-flight melting furnace 1 having a construction as shown in Fig. 1. Dust discharged from a flue 4 and deposited in a bag filter and in an exhaust air duct (not shown) connected to the bag filter, was recovered. In the Fig. 1, reference symbol 5 represents an in-flight melting burner. The production of molten glass was carried out at an atmosphere temperature of from 1,500 to 1,550°C in the case of soda lime glass and at an atmosphere temperature of from 1,600 to 1,660°C in the case of borosilicate glass, and every predetermined interval, dust was recovered and its amount was measured. The ratio (unit: mass%) of the amount of dust to the supply amount of granules was obtained and taken as the dust formation rate.
Further, with respect to some granules, by means of a small scale test furnace having the same construction as in Fig. 1, a melting test was carried out by supplying granules in an amount of from 2 to 7 kg/hr together with air for pneumatic transportation at a rate of from 1 to 3 $Nm^3$/hr, whereupon the ratio of the amount of dust to the supply amount of granules was obtained, and then, using a preliminarily-prepared relation formula of the formation rates of dust between the test furnace and the in-flight melting furnace 1, the obtained ratio was converted to the ratio of the amount of dust in the in-flight melting furnace 1 to obtain the dust formation rate.

[Composition of glass raw materials]

In Tables 1 and 2, the composition (unit: mass%, the total may not necessarily be 100 because of rounded off significant figures) of glass raw materials in each Example is shown. The average particle size (D50) of each glass raw material before supplied to the granulation step is also shown. Such D50 before supplied to the granulation step is a value obtained by the wet measuring method.
Table 1 presents Examples for soda lime glass, and in each Example, the desired glass composition was as follows:

72 mass% of $SiO_2$, 1.8 mass% of $Al_2O_3$, 13.1 mass% of $Na_2O$, 0.4 mass% of $K_2O$, 4.0 mass% of MgO and 8.4 mass% of CaO.

Table 2 presents Examples for alkali-free borosilicate glass, and in each Example, the desired glass composition was as follows:

59.7 mass% of $SiO_2$, 17.4 mass% of $Al_2O_3$, 8.0 mass% of $B_2O_3$, 3.2 mass% of MgO, 4.0 mass% of CaO, and 7.6 mass% of SrO.

[Granulation method]

As the granulation method, a spray drying granulation method (identified as S in Tables), a tumbling granulation method by means of Loedige mixer (identified as L in Tables) or a tumbling granulation method by means of Eirich mixer (identified as E in Tables) was used.

[Reference Examples 1 and 2: Spray drying granulation method]

Reference Examples 1 and 2 are Examples which were carried out under the same conditions on different days. Good reproducibility was obtained.

Into a ball mill container having a capacity of 8 $m^3$ wherein spherical stones having a diameter of from 50 to 70 mm and composed mainly of silica, were accommodated to occupy about 50% of the volume, 1.5 tons of glass raw materials with the composition as shown in Table 1 and 1 ton of water passed through a 3 $\mu$m filter as a medium, were introduced, followed by pulverization and mixing for 16 hours to prepare a raw material slurry.

The obtained raw material slurry was subjected to spray drying by means of a spray drier of an atomizer system under conditions of an inlet temperature of 260°C and an outlet temperature of 170°C at such a rate that about 100 kg of granules were obtainable per hour.

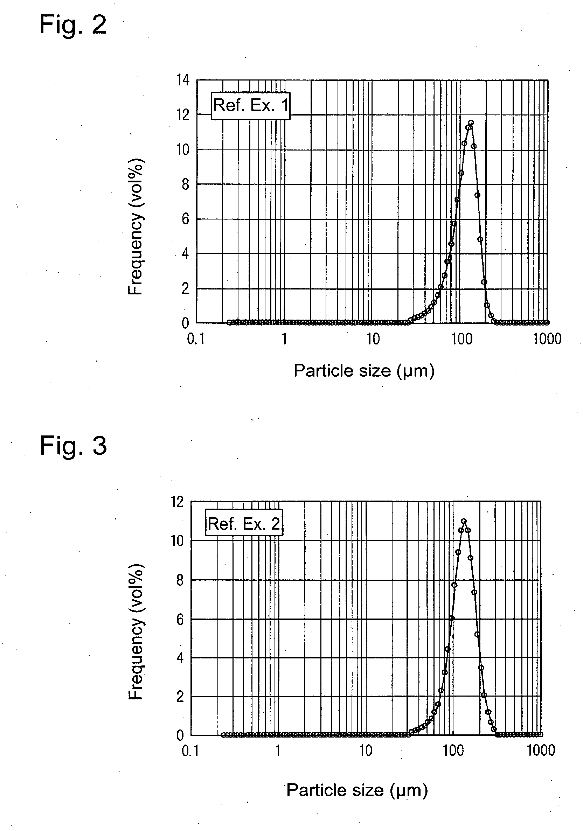

The obtained granules were subjected to sieving through a sieve having 500 $\mu$m openings. With respect to the granules passed through the sieve (recovery rate: 100 mass%), measurements of the above (a) to (h) were carried out. The results are shown in Figs. 2 and 3 and in Table 3. In the particle size distribution curves in Figs. 2 and 3, the abscissa represents the particle size (unit: $\mu$m) and the ordinate represents the frequency (unit: vol%) (the same applies hereinafter).

[Example 3: Tumbling granulation method (Loedige mixer)]

Into a Loedige mixer (manufactured by Chuoh Kikoh) having a capacity of 130L, 30 kg of glass raw materials with the composition as shown in Table 1 were introduced and mixed for 3 minutes at a shovel rotational speed of 160 rpm and a chopper rotational speed of 1,750 rpm. Thereafter, an aqueous solution prepared to contain 2 mass%, as solid content, of polyvinyl alcohol (hereinafter referred to simply as PVA) (manufactured by Chukyo Yushi Co., Ltd., tradename: Ceruna WF-804) as a binder, was introduced in an amount of 4.1 kg (corresponding to 12 mass% by weight ratio of the aqueous solution to (the glass raw materials + the aqueous solution)) over a period of about 30 seconds, whereupon granulation was carried out by stirring for 16 minutes while maintaining the shovel and chopper rotational speeds under the same conditions as above.

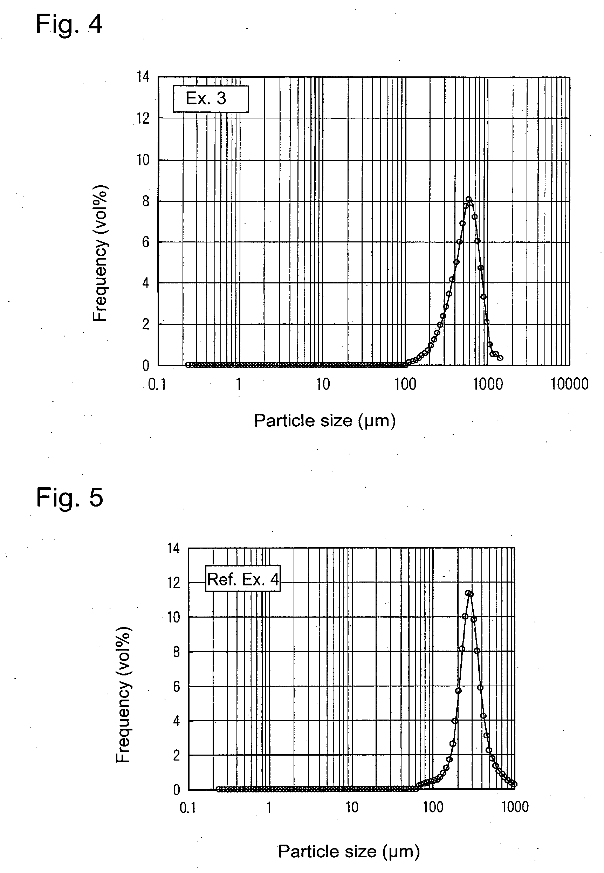

The obtained granules were put into a stainless steel container and dried at 120°C for about 12 hours in a hot air drier. The granules after the drying were subjected to sieving through a sieve having 1 mm openings. With respect to the granules passed through the sieve (recovery rate: 95 mass%), measurements of the above (a) to (h) were carried out. The results are shown in Fig. 4 and in Table 3.

[Reference Example 4: Spray drying granulation method]

Into an alumina-lined ball mill container having a capacity of 200 L, alumina spheres having a diameter of 20 mm were accommodated to occupy about 50% of the volume. Then, 100 kg of glass raw materials with the composition as shown in Table 2 and 100 kg of water passed through a 3 $\mu$m filter as a medium, were introduced thereto, and further a dispersant of polyammonium acrylate type (manufactured by Chukyo Yushi Co., Ltd., tradename: Ceruna D305) was added in an amount of 0.5 mass% based on the glass raw materials, followed by pulverization and mixing for 4 hours to obtain a raw material slurry.

The obtained raw material slurry was subjected to spray drying by means of a spray drier of a pressure nozzle system under a condition of an inlet temperature of 500°C.

The obtained granules were subjected to sieving through a sieve having 1 mm openings. With respect to the granules passed through the sieve (recovery rate: 100 mass%), measurements of the above (a) to (h) were carried out. The results are shown in Fig. 5 and in Table 3.

[Reference Examples 5 and 6: Spray drying granulation method]

Into a ball mill container having a capacity of about 20 $m^3$ wherein spherical stones having a diameter of from 50 to 80 mm and composed mainly of silica, were accommodated to occupy about 50% of the volume, 5 tons of glass raw materials with the composition as shown in Table 2 and 5 tons of water passed through a 3 $\mu$m filter as a medium, were introduced, and further a dispersant of polyammonium acrylate type (manufactured by Toagosei Co., Ltd., tradename: Aron A-6114) was added in an amount of 0.5 mass% based on the glass raw materials, followed by pulverization and mixing for 1 hour. To the obtained slurry, 5 tons of water was added for dilution to prepare a raw material slurry for spray drying.

The obtained raw material slurry was subjected to spray drying by means of a spray drier of a pressure nozzle system under a condition of an inlet temperature of 500°C at such a rate that about 800 kg of granules were obtainable per hour.

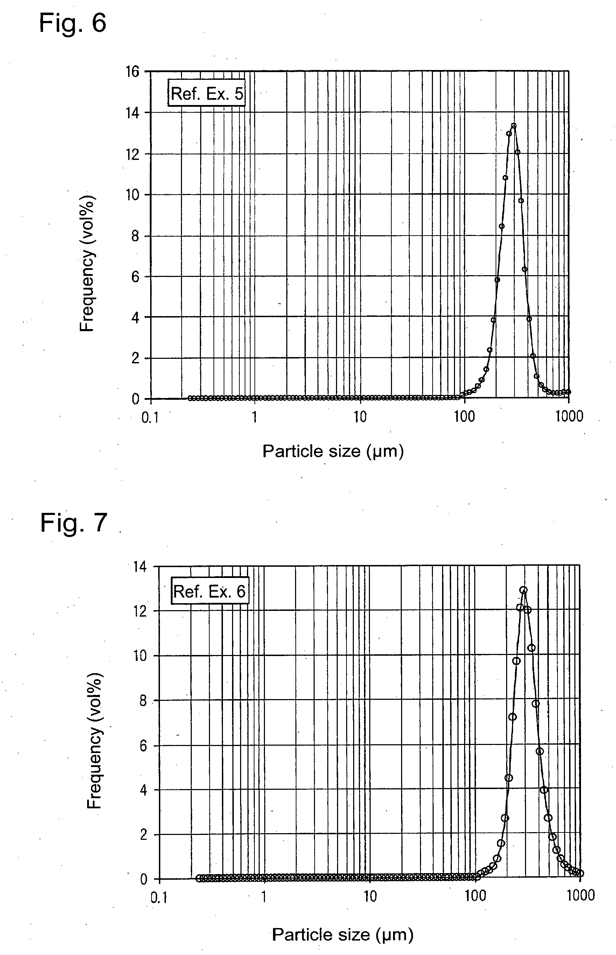

The obtained granules were subjected to sieving through a sieve having 1 mm openings. With respect to the granules passed through the sieve (recovery rate: 100 mass%), measurements of the above (a) to (h) were carried out. The results are shown in Figs. 6 and 7 and in Table 3.

[Examples 7 and 8: Tumbling granulation method (Eirich mixer)]

Into an Eirich mixer (R08, manufactured by Nippon Eirich Co., Ltd.) having a capacity of 75L, 50 kg of glass raw materials with the composition as shown in Table 2 were introduced, and the raw materials were mixed for 30 seconds at a pan rotational speed of 24 rpm and a rotor rotational speed of 500 rpm. Thereafter, an aqueous solution prepared to contain 2 mass%, as solid content, of PVA as a binder, was introduced in an amount of 7.1 kg (corresponding to 12 mass% by weight ratio of the aqueous solution to (the glass raw materials + the aqueous solution)), and at the same time, the rotor rotational speed was increased to 1,680 rpm and the granulation was carried out for 15 minutes.

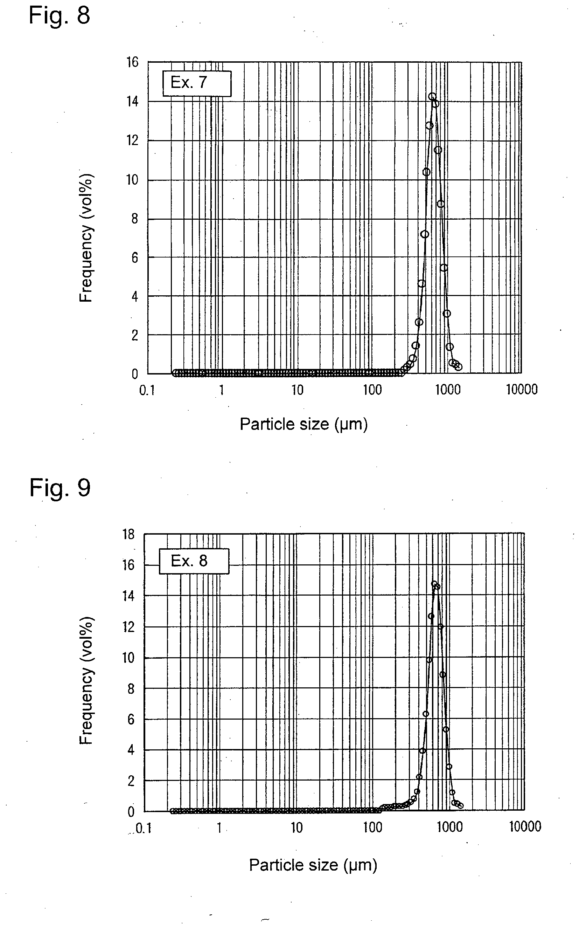

The obtained granules were put into a stainless steel container and dried at 120°C for about 12 hours in a hot air drier. Further, the granules after the drying were subjected to sieving through a sieve having 1 mm openings. With respect to the granules passed through the sieve (recovery rate: 90 mass%), measurements of the above (a) to (h) were carried out. The results are shown in Figs. 8 and 9 and in Table 3.

[Example 9: Tumbling granulation method (Eirich mixer)]

Preliminarily a liquid having magnesium chloride hexahydrate and magnesium sulfate heptahydrate in amounts five times the blend proportions shown in Table 2 (i.e. 17.5 kg of the magnesium chloride and 6 kg of the magnesium sulfate) dissolved in 68.2 kg of water, was prepared.

Then, 476.5 kg of raw materials having magnesium chloride hexahydrate and magnesium sulfate heptahydrate excluded from the raw materials shown in Table 2, were introduced into an Eirich mixer (manufactured by Nippon Eirich Co., Ltd., tradename: RV15) having a capacity of 750 L and mixed for 30 seconds at a pan rotational speed of 10 rpm and at a rotor rotational speed of 250 rpm. Introduced thereto was 91.7 kg of the liquid having magnesium chloride hexahydrate and magnesium sulfate heptahydrate dissolved therein (solid content: 23.5 kg, water: 68.2 kg) (12 mass% of water content to 500 kg of the total of glass raw materials), and at the same time, the rotor rotational speed was increased to 860 rpm and the granulation was carried out for 15 minutes. Further, the rotor rotational speed was decreased to 230 rpm and particle size regulating operation (to regulate the particle size and particle shape of granules) was carried out for 2 minutes, and then, the granules were taken out from the container and dried by a drier until the amount of remaining water became at most 2%. The granules after the drying were subjected to sieving through a sieve having 1 mm openings. With respect to the granules passed through the sieve (recovery rate: 80 mass%), measurements of the above (a) to (h) were carried out. The results are shown in Fig. 10 and in Table 3.

[Comparative Example 1: Tumbling granulation method (Loedige mixer)]

In this Example, as compared with Reference Examples 1 and 2 and Example 3, a coarse raw material (D50=56.6 μm) was used for only silica sand.

Into a Loedige mixer (manufactured by Chuoh Kikoh) having a capacity of 1,200L, 250 kg of glass raw materials with the composition as shown in Table 1 were introduced, and the raw material was mixed for 3 minutes at a shovel rotational speed of 115 rpm and a chopper rotational speed of 1,750 rpm. Thereafter, 27.5 kg of an aqueous solution prepared to contain 5 mass%, as solid content, of PVA (manufactured by Chukyo Yushi Co., Ltd., tradename: Ceruna WF-804) as a binder, was introduced over a period of about 30 seconds, whereupon granulation was carried out by stirring for 10 minutes while maintaining the shovel and chopper rotational speeds under the same conditions as above.

The obtained granules were put into a stainless steel container and dried at 120°C for about 12 hours in a hot air drier. Further, the granules after the drying were subjected to sieving through a sieve having 1 mm openings. With respect to the granules passed through the sieve (recovery rate: 90 mass%), measurements of the above (a) to (h) were carried out. The results are shown in Fig. 11 and in Table 3.

[Comparative Example 2: Spray drying granulation method]

Into a ball mill container having a capacity of about 8 m$^3$ wherein spherical stones having a diameter of from 50 to 70 mm and composed mainly of silica, were accommodated to occupy about 50% of the volume, 1.1 tons of glass raw materials with the composition as shown in Table 2 and 1.6 tons of water passed through a 3 μm filter as a medium, were introduced, and further a dispersant of polyammonium acrylate type (manufactured by Chukyo Yushi Co., Ltd., tradename: Ceruna D305) was added in an amount of 0.5 mass% based on the glass raw materials, followed by mixing for 1 hour to obtain a raw material slurry.

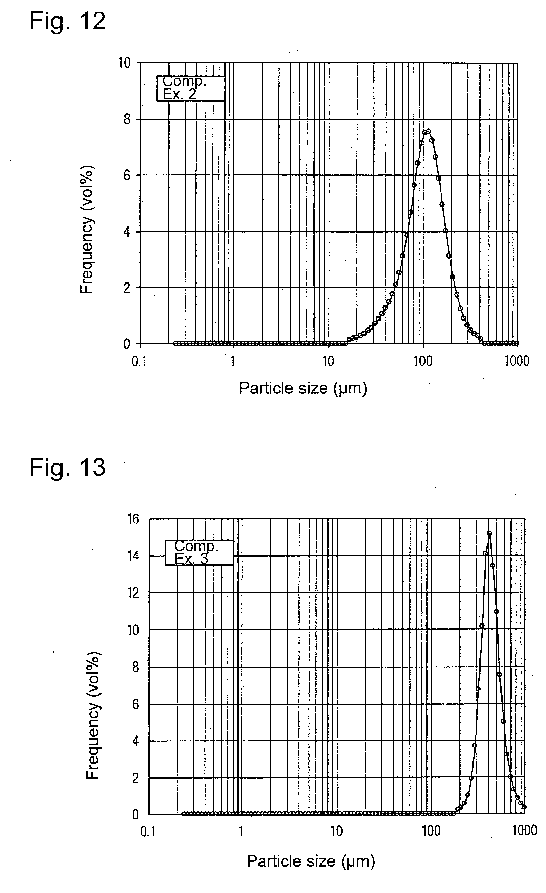

The obtained raw material slurry was subjected to spray drying by means of a spray drier of an atomizer system under conditions of an inlet temperature of 300°C and an outlet temperature of 160°C at such a rate that about 55 kg of granules were obtainable per hour. The obtained granules were subjected to sieving through a sieve having 500 μm openings. With respect to the granules passed through the sieve (recovery rate: 100 mass%), measurements of the above (a) to (h) were carried out. The results are shown in Fig. 12 and in Table 3.

[Comparative Examples 3 and 4: Spray drying granulation method]

Into a ball mill container having a capacity of about 20 m$^3$ wherein spherical stones having a diameter of from 50 to 80 mm and composed mainly of silica, were accommodated to occupy about 50% of the volume, 5 tons of glass raw materials with the composition as shown in Table 2 and 5 tons of water passed through a 3 μm filter as a medium, were introduced, and further a dispersant of polyammonium acrylate type (manufactured by Toagosei Co., Ltd., tradename: Aron A-6114) was added in an amount of 0.5 mass% based on the glass raw materials, followed by pulverization and mixing for 8 hours to prepare a raw material slurry.

In Comparative Example 3, to the obtained raw material slurry, 2.5 tons of water was further added for dilution to obtain a slurry for spray drying.

In Comparative Example 4, to the obtained raw material slurry, 5 tons of water was further added for dilution to obtain a slurry for spray drying.

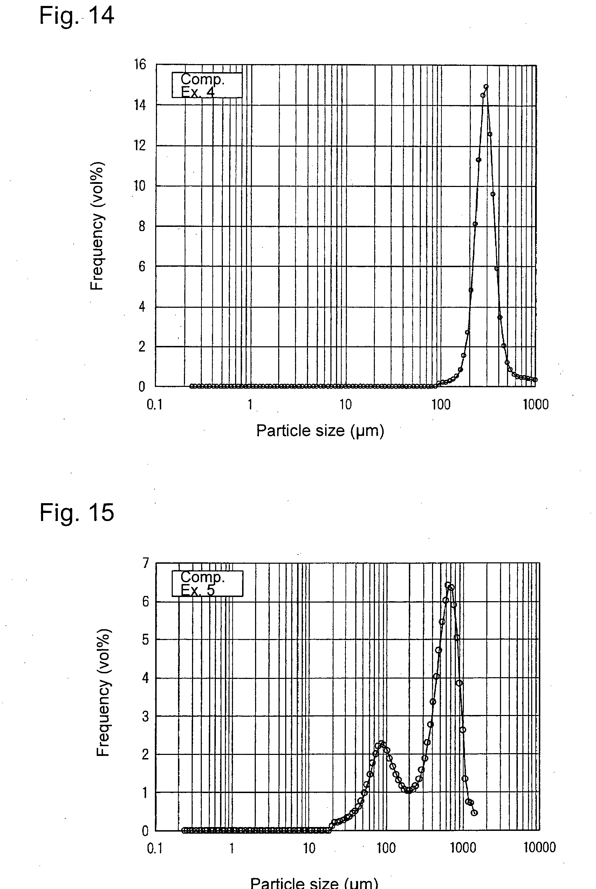

The obtained slurry for spray drying was subjected to spray drying by means of a spray drier of a pressure nozzle system under a condition of an inlet temperature of 500°C at such a rate that about 800 kg of granules were obtainable per hour. The obtained granules were subjected to sieving through a sieve having 1 mm openings. With respect to the granules passed through the sieve (recovery rate: 100 mass%), measurements of the above (a) to (h) were carried out. The results are shown in Figs. 13 and 14 and in Table 3.

[Comparative Example 5: Tumbling granulation method (Loedige mixer)]

Into a Loedige mixer (manufactured by Chuoh Kikoh) having a capacity of 1,200L, 350 kg of glass raw materials with the composition as shown in Table 2 were introduced, and the raw materials were mixed for 3 minutes at a shovel rotational speed of 115 rpm and a chopper rotational speed of 1,750 rpm. Thereafter, 39 kg of an aqueous solution prepared to contain 5 mass%, as solid content, of PVA (manufactured by Chukyo Yushi Co., Ltd., tradename: Ceruna WF-804) as a binder, was introduced over a period of about 30 seconds, whereupon granulation was carried out by stirring for 10 minutes while maintaining the shovel and chopper rotational speeds under the same conditions as above.

The obtained granules were put into a stainless steel container and dried at 120°C for about 12 hours in a hot air drier. Further, the granules after the drying were subjected to sieving through a sieve having 1 mm openings. With respect to the granules passed through the sieve (recovery rate: 90 mass%), measurements of the above (a) to (h) were carried out. The results are shown in Fig. 15 and in Table 3.

[Comparative Example 6: Tumbling granulation method (Eirich mixer)]

Into an Eirich Intensive Mixer (manufactured by Nippon Eirich Co., Ltd.) having a capacity of 250L, 170 kg of glass raw materials with the composition as shown in Table 2 were introduced and mixed for 2 minutes at a pan rotational speed of 18 rpm and a rotor rotational speed of 300 rpm. Thereafter, 25 kg of an aqueous solution prepared to contain 5 mass% of PVA (manufactured by Chubu Saiden Co., Ltd., tradename: Banstar PX25) as a binder, was introduced, and at the same time, the rotor rotational speed was increased to 1,000 rpm and the granulation was carried out for about 8 minutes. Thereafter, the rotor rotational speed was again decreased to 300 rpm, and particle size regulating operation (to regulate the particle size and particle shape of granules) was carried out.

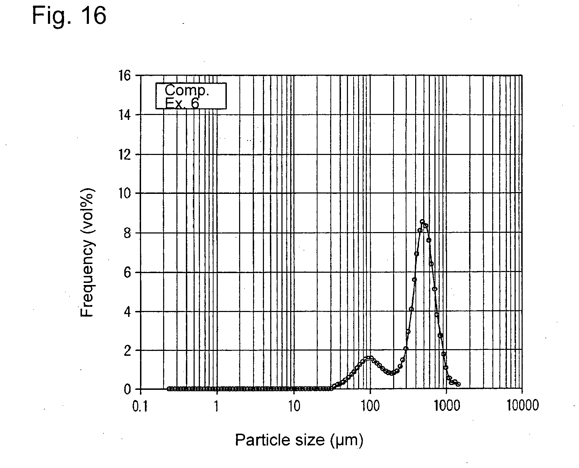

The obtained granules were put into a stainless steel container and dried at 120°C for about 8 hours in a hot air drier. Further, the granules after the drying were subjected to sieving through a sieve having 1 mm openings. With respect to the granules passed through the sieve (recovery rate: 90 mass%), measurements of the above (a) to (h) were carried out. The results are shown in Fig. 16 and in Table 3.

[Table 1]

| | D50 [μm] before granulation tep | Composition (mass%) of glass raw material mixture | | | |
|---|---|---|---|---|---|
| | | Ref. Ex. 1 | Ref. Ex. 2 | Ex. 3 | Comp. Ex. 1 |
| Silica sand | 9.2 | 61.0 | 61.0 | | |
| | 20.7 | | | 61.0 | |
| | 56.6 | | | | 61.0 |
| $Al_2O_3$ | 4.8 | 1.5 | | | |
| $Na_2CO_3$ | 132.8 | 18.6 | | | |
| $CaCO_3$ | 13.2 | 12.6 | | | |
| $Na_2SO_4$ | 366.6 | 0.7 | | | |
| $K_2CO_3$ | 367.4 | 0.5 | | | |
| $Mg(OH)_2$ | 4.5 | 5.2 | | | |
| Total | | 100 | 100 | 100 | 100 |
| Granulation method | | S | S | L | L |

[Table 2]

| | D50[$\mu$m] before granulation step | Composition (mass%) of glass raw material mixture | | | | | | | | | | |
|---|---|---|---|---|---|---|---|---|---|---|---|---|
| | | Ref. Ex. 4 | Ref. Ex. 5 | Ref. Ex. 6 | Ex. 7 | Ex. 8 | Ex. 9 | Comp. Ex. 2 | Comp. Ex. 3 | Comp. Ex. 4 | Comp. Ex. 5 | Comp. Ex. 6 |
| Silica sand | 0.4 | 10.1 | | | | | | | | | | |
| | 9.2 | 40.1 | | | | | | 50.7 | 50.3 | 50.3 | | |
| | 20.7 | | | | 51.7 | 51.1 | 48.9 | | | | | |
| | 44.5 | | 48.2 | 49.7 | | | | | | | 48.4 | 50.1 |
| $Al_2O_3$ | 4.8 | 14.4 | | | 14.9 | 14.7 | | 14.7 | 14.6 | 14.6 | | |
| | 57.7 | | 14.0 | 14.4 | | | 14.1 | | | | 14.0 | 14.6 |
| $H_3BO_3$ | 45.4 | | | | 14.6 | 14.5 | | 14.4 | 14.3 | 14.3 | | |
| | 345.3 | 14.1 | 15.5 | 14.1 | | | 13.9 | | | | 15.6 | 14.3 |
| $Mg(OH)_2$ | 4.5 | 3.8 | 1.8 | 0.8 | 4.1 | 3.8 | 0.2 | 4.1 | 3.8 | 3.8 | 2.1 | 1.6 |
| Dolomite | 51.0 | | | | | | 8.8 | | | | | |
| | 204.4 | | 8.7 | 9.4 | | | | | | | 8.3 | 9.0 |
| $CaCO_3$ | 13.2 | 5.8 | | | | | | 6.0 | 5.9 | 5.9 | | |
| $Ca(OH)_2$ | 8.1 | | | | 4.6 | 4.6 | | | | | | |
| $SrCO_3$ | 5.3 | | | | | | 9.0 | | | | | |
| | 7.3 | 8.2 | | | 8.5 | 8.4 | | 8.5 | 8.3 | 8.3 | | 8.2 |
| | 371.0 | | 6.2 | 9.0 | | | | | | | 6.3 | |
| CaF | 26.6 | | 0.4 | | | | 0.4 | | | | 0.3 | |
| $SrCl_2 \cdot 6H_2O$ | - | 1.6 | 4.5 | | 1.6 | 1.6 | | 1.6 | 1.6 | 1.6 | 4.3 | 1.6 |
| $MgCl_2 \cdot 6H_2O$ | - | | | 1.2 | | | 3.5 | | | | | |
| $CaSO_4 \cdot 2H_2O$ | 224.7 | 0.6 | | | | | | | | | 0.6 | 0.5 |
| $MgSO_4 \cdot 7H_2O$ | - | 1.3 | 0.8 | 1.3 | | 1.3 | 1.2 | | | 1.3 | 1.3 | |
| Total | | 100 | 100 | 100 | 100 | 100 | 100 | 100 | 100 | 100 | 100 | 100 |
| Granulation method | | S | S | S | E | E | E | S | S | S | L | E |

EP 2 735 549 B1

EP 2 735 549 B1

[Table 31

| | Granulation method | Particles to constitute granules | | | | | Granules | | | | | |
|---|---|---|---|---|---|---|---|---|---|---|---|---|
| | | (a) | (b) | | | | (c) | (d) | (e) | (f) | (g) | (h) |
| | | D50 of silica sand [μm] | D10 [μm] | D50 [μml | D90 [μm] | D90/D10 | D50 [μm] | Content of particles of at most 48 μm [%] | Number of peaks in particle size distribution curve | Bulk density [%] | Crushing strength [MPa] | Incidence rate of dust [mass%] |
| Ex. 1* | S | 8.3 | 2.1 | 8.1 | 28.7 | 13.7 | 113 | 3.4 | 1 | 63 | 3.3 | 2.0 |
| Ex. 2* | | 8.2 | 2.1 | 8.1 | 28.7 | 13.7 | 125 | 1.6 | 1 | 61 | 3.7 | 1.9 |
| Ex. 3 | L | 20.7 | 3.4 | 18.8 | 39.2 | 11.5 | 528 | 0 | 1 | 64 | 3.4 | 1.7 |
| Ex. 4* | S | 7.5 | 1.8 | 4.9 | 20.6 | 11.4 | 274 | 0 | 1 | 52 | 1.3 | 1.4 |
| Ex. 5* | | 20.2 | 3.3 | 17.4 | 46.5 | 14.1 | 275 | 0 | 1 | 54 | 1.5 | 2.1 |
| Ex. 6* | | 22.4 | 3.1 | 17.0 | 47.8 | 15.4 | 291 | 0 | 1 | 54 | 2.4 | 1.7 |
| Ex. 7 | E | 20.7 | 2.6 | 16.1 | 44.6 | 17.2 | 627 | 0 | 1 | 68 | 7.3 | 2.5 |
| Ex. 8 | | | 2.6 | 16.1 | 44.6 | 17.2 | 630 | 0 | 1 | 71 | 9.1 | 2.8 |
| Ex. 9 | | | 3.9 | 22.6 | 64.8 | 16.6 | 466 | 0 | 1 | 69 | 13.5 | 1.0 |
| Comp. Ex. 1 | L | 56.6 | 5.8 | 50.2 | 87.2 | 15.0 | 173 | 6.2 | 2 | 68 | 5.6 | 7.2 |
| Comp. Ex. 2 | S | 9.2 | 2.3 | 8.4 | 22.5 | 9.8 | 102 | 9.3 | 1 | 48 | Less than 0.5 | 10.0 |
| Comp. Ex. 3 | | 8.0 | 2.4 | 6.4 | 19.4 | 8.1 | 409 | 0 | 1 | 43 | Less than 0.5 | 14.0 |
| Comp. Ex. 4 | | | 2.3 | 5.5 | 15.9 | 6.9 | 278 | 0 | 1 | 49 | Less than 0.5 | 7.0 |
| Comp. Ex. 5 | L | 44.5 | 9.6 | 53.8 | 275.8 | 28.7 | 453 | 4.1 | 2 | 65 | 6.0 | 10.0 |
| Comp. Ex. 6 | E | | 6.9 | 51.0 | 175.9 | 25.5 | 441 | 1.4 | 2 | 70 | 7.3 | 9.1 |
| * Reference Example. | | | | | | | | | | | | |

18

As shown by the results in Table 3 and Figs. 2 to 16, the granules obtained in Reference Examples 1, 2 and 4 to 6 as well as in Examples 3 and 7 to 9 were such that the content of particles having a particle size of at most 48 μm which are likely to be dust, was little, the number of peaks in the particle size distribution curve was 1, the bulk density was high, the crushing strength was high, and when used for the production of molten glass by an in-flight melting method, the dust formation rate was low. The reproducibility of the properties of the granules was good, and the melting property in the in-flight melting furnace was also good.

Whereas, Comparative Example 1 is an Example in which D50 of silica sand in the constituting particles was as large as 56.6 μm. The content of particles having a particle size of at most 48 μm in the granules was high, and two peaks were observed in the particle size distribution curve. When molten glass was produced by using such granules, dust was generated in a relatively large amount.

Comparative Examples 2 to 4 are Examples in which the value of D90/D10 of granule-constituting particles was smaller than 10. The bulk density of the granules was low, and the crushing strength of the granules was low. Further, the content of particles having a particle size of at most 48 μm in the granules was high. When molten glass was produced by using such granules, dust was generated in a large amount, and frequent treatment of dust was required.

Comparative Examples 5 and 6 are Examples in which D50 of silica sand in the constituting particles was as large as 44.5 μm. Although the content of particles having a particle size of at most 48 μm in the granules was low, two peaks were observed in each particle size distribution curve. When molten glass was produced by using such granules, dust was generated in a large amount, and frequent treatment of dust was required.

The present invention provides a method for producing molten glass by an in-flight melting method, and from the obtained molten glass, a glass product is produced. With the granules of a glass raw material mixture to be used in the present invention, formation of dust during their transportation can easily be suppressed, and thus, the present invention is suitable for mass production of molten glass by an in-flight melting method.

REFERENCE SYMBOLS

1: In-flight melting furnace
2: Granules
3: Molten glass
4. Flue
5: In-flight melting burner

**Claims**

1. A method for producing molten glass, which comprises melting granules of a glass raw material mixture in a gas phase atmosphere so that at least a part of the granule particles is melted to form molten glass particles and collecting the molten glass particles to form molten glass, wherein the granules contain silica sand as a glass raw material, **characterized in that** the method comprises producing the granules by mixing glass raw materials, followed by granulating the mixture by a tumbling granulation method without pulverizing it, and the granules satisfy the following conditions:

(1) in a particle size distribution curve obtained by sieving the granules by means of a sieve having 1 mm openings and measuring the granules passed through the sieve by a dry laser diffraction scattering method, D50 representing the cumulative volume median diameter is from 466 to 800 μm,
(2) the average particle size of the silica sand in the granules is from 20.7 to 40 μm, provided that the particle size distribution curve of silica sand to be used as a glass raw material is measured by a wet laser diffraction scattering method, and D50 representing the cumulative volume median diameter in the obtained particle size distribution curve is taken as the average particle size of the silica sand, and
(3) in a particle size distribution curve obtained by measuring water-insoluble particles which are water-insoluble components of which the amount soluble in 100 mL of water at 20°C is less than 1.0 g and which are particles to constitute the granules by a wet laser diffraction scattering method, the ratio of D90/D10 is at least 10, where D10 represents the particle size of the 10% cumulative volume from the small particle size side and D90 represents the particle size of the 90% cumulative volume from the small particle size side,

wherein the granules have a bulk density of at least 64% as measured by a mercury intrusion technique with bulk density [%] = 100 - porosity [%], and

the granules have a crushing strength of at least 1 MPa with a value of the crushing strength of the granules being an average value of values (unit: MPa) obtained by measuring the crushing strength by the method in accordance with JIS R1639-5 with respect to from 50 to 100 granule particles optionally sampled from the granules.

2. The method for producing molten glass according to Claim 1, wherein the number of peaks in a particle size distribution curve obtained by measuring the granules by a dry laser diffraction scattering method, is 1.

3. The method for producing molten glass according to Claim 1 or 2, wherein in a particle size distribution curve obtained by measuring the granules by a dry laser diffraction scattering method, the content of particles having a particle size of at most 48 $\mu$m is at most 5 vol%.

4. A method for producing a glass product, which comprises producing molten glass by the method as defined in any one of claims 1 to 3, shaping the obtained molten glass, followed by annealing.

**Patentansprüche**

1. Verfahren zur Herstellung von geschmolzenem Glas, umfassend das Schmelzen von Granalien eines Glasrohmaterialgemischs in einer Gasphasenatmosphäre, so dass mindestens ein Teil der Granalienteilchen geschmolzen wird, um geschmolzene Glasteilchen zu bilden, und das Sammeln der geschmolzenen Glasteilchen um geschmolzenes Glas zu bilden, wobei die Granalien Siliziumdioxidsand als ein Glasrohmaterial enthalten, **dadurch gekennzeichnet, dass** das Verfahren das Herstellen der Granalien durch das Mischen von Glasrohmaterialien, gefolgt von dem Granulieren des Gemischs durch ein Taumelgranulationsverfahren ohne es zu pulverisieren, umfasst und die Granalien die folgenden Bedingungen erfüllen:

(1) in einer Teilchengrößenverteilungskurve, erhalten durch das Sieben der Granalien mit Hilfe eines Siebs mit 1 mm großen Öffnungen und das Messen der Granalien, die das Sieb passiert haben, mittels eines trockenen Laserbeugungsstreuungsverfahrens, beträgt D50, welches den kumulativen mittleren Volumendurchmesser darstellt, von 466 bis 800 $\mu$m,
(2) die durchschnittliche Teilchengröße des Siliziumdioxidsands in den Granalien beträgt von 20,7 bis 40 $\mu$m, vorausgesetzt, dass
die Teilchengrößenverteilungskurve von Siliziumdioxidsand, welcher als ein Glasrohmaterial verwendet wird, mittels eines feuchten Laserbeugungsstreuungsverfahrens gemessen wird und D50, welches den kumulativen mittleren Volumendurchmesser in der erhaltenen Teilchengrößenverteilungskurve darstellt, als die durchschnittliche Teilchengröße des Siliziumdioxidsands genommen wird, und
(3) in einer Teilchengrößenverteilungskurve, welche durch das Messen wasserunlöslicher Teilchen, die wasserunlösliche Komponenten sind, von welchen die Menge, die in 100 mL Wasser bei 20°C löslich ist, weniger als 1,0 g beträgt und welche Teilchen sind, aus welchen die Granalien zusammengesetzt sind, in einem feuchten Laserbeugungsstreuungsverfahren erhalten wird, beträgt das Verhältnis von D90/D10 mindestens 10, wobei D10 die Teilchengröße des 10% kumulativen Volumens von der Seite mit kleiner Teilchengröße darstellt und D90 die Teilchengröße des 90% kumulativen Volumens von der Seite mit kleiner Teilchengröße darstellt,

wobei die Granalien eine Schüttdichte von mindestens 64% aufweisen, gemessen mittels einer Quecksilberintrusionstechnik, wobei Schüttdichte [%] = 100 - Porosität [%], und
die Granalien eine Bruchstärke von mindestens 1 MPa aufweisen, wobei ein Wert der Bruchstärke der Granalien ein Durchschnittswert von Werten (Einheit: MPa) ist, erhalten durch das Messen der Bruchstärke durch das Verfahren gemäß JIS R1639-5, bezogen auf von 50 bis 100 Granalienteilchen, die beliebig aus den Granalien ausgewählt wurden.

2. Verfahren zur Herstellung von geschmolzenem Glas nach Anspruch 1, wobei die Zahl an Peaks in einer Teilchengrößenverteilungskurve, erhalten durch das Messen der Granalien mittels eines trockenen Laserbeugungsstreuungsverfahrens, 1 beträgt.

3. Verfahren zur Herstellung von geschmolzenem Glas nach Anspruch 1 oder 2, wobei in einer Teilchengrößenverteilungskurve, erhalten durch das Messen der Granalien mittels eines trockenen Laserbeugungsstreuungsverfahrens, der Gehalt an Teilchen mit einer Teilchengröße von höchstens 48 $\mu$m höchstens 5 Volumen-% beträgt.

**4.** Verfahren zur Herstellung eines Glasprodukts, umfassend das Herstellen von geschmolzenem Glas durch das Verfahren, wie in einem der Ansprüche 1 bis 3 definiert, das Formen des erhaltenen, geschmolzenen Glases, gefolgt von Tempern.

**Revendications**

**1.** Procédé pour produire du verre fondu, qui comprend la fusion de granules d'un mélange de matériau brut de verre dans une atmosphère de phase gazeuse, de telle manière qu'au moins une partie des particules de granules sont fondues pour former des particules de verre fondu, et la collecte des particules de verre fondu pour former du verre fondu, dans lequel les granules contiennent du sable siliceux en tant que matériau brut de verre, **caractérisé en ce que**
le procédé comprend la production des granules en mélangeant des matériaux bruts de verre, puis en granulant le mélange par un procédé de granulation par tonnelage sans le pulvériser, et
les granules satisfont les conditions suivantes :

(1) dans une courbe de distribution des tailles de particules obtenues en tamisant les granules au moyen d'un tamis ayant des ouvertures d'1 mm et en mesurant les granules ayant traversé le tamis par un procédé de diffraction-diffusion laser en voie sèche, le D50 représentant le diamètre volumique médian cumulé est de 466 à 800 um,
(2) la taille de particules moyennes du sable siliceux dans les granules est de 20,7 à 40 $\mu$m, à condition que la courbe de distribution des tailles de particules xxx du sable siliceux à utiliser en tant que matériau brut de verre soit mesurée par un procédé de diffraction-diffusion laser en voie humide, et D50 représentant le diamètre volumique médian cumulé dans la courbe de distribution des tailles de particules obtenues soit considéré comme la taille de particules moyenne du sable siliceux, et
(3) dans une courbe de distribution des tailles de particules obtenues en mesurant des particules insolubles dans l'eau qui sont des composants insolubles dans l'eau dont la quantité soluble dans 100 mL d'eau à 20 °C soit inférieure à 1,0 g et qui sont des particules pour constituer les granules par un procédé de diffraction-diffusion laser par voie humide, le rapport D90/D10 soit d'au moins 10, où D10 représente la taille de particules du volume cumulé à 10 % du côté petite taille de particules et D90 représente la taille de particules du volume cumulé à 90 % du côté petite taille de particules,

dans lequel les granules ont une masse volumique apparente d'au moins 64 %, mesurée par une technique d'intrusion de mercure avec masse volumique [%] = 100 - porosité [%], et
les granules ont une résistance à l'écrasement d'au moins 1 MPa avec une valeur de la résistance à l'écrasement des granules qui est une valeur moyenne de valeurs (unité : MPa) obtenue en mesurant la résistance à l'écrasement par le procédé conformément à la norme JIS R1639-5 par rapport à 50 à 100 particules de granule facultativement prélevées parmi les granules.

**2.** Procédé pour produire du verre fondu selon la revendication 1, dans lequel le nombre de pics dans une courbe de distribution des tailles de particules obtenues en mesurant les granules par un procédé de diffraction-diffusion laser en voie sèche est de 1.

**3.** Procédé pour produire du verre fondu selon la revendication 1 ou 2, dans lequel, dans une courbe de distribution des tailles de particule obtenue en mesurant les granules par un procédé de diffraction-diffusion laser en voie sèche, la teneur en particules ayant une taille de particules d'au plus 48 $\mu$m est d'au plus 5 % en volume.

**4.** Procédé pour produire un produit en verre, qui comprend la production de verre fondu par le procédé tel que défini dans l'une quelconque des revendications 1 à 3, la mise en forme du verre fondu obtenu, suivies d'un recuit.

Fig. 1

Fig. 2

Fig. 3

## Fig. 4

## Fig. 5

## Fig. 6

Ref. Ex. 5

## Fig. 7

Ref. Ex. 6

## Fig. 8

## Fig. 9

## Fig. 10

## Fig. 11

Fig. 12

Fig. 13

Fig. 14

Fig. 15

Fig. 16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007297239 A

- EP 2471756 A1

**Non-patent literature cited in the description**

- Development of Innovative In-flight Glass Melting Technology for Energy Conservation. *NEW GLASS,* 2008, vol. 23 (4), 42-45

- **NOBUYASU MIZUTANI et al.** Ceramic Processing. Gihodo Shuppan Co., Ltd, 1985, 195-201